(19) Europäisches Patentamt
European Patent Office
Office européen des brevets

(11) **EP 3 573 230 B1**

(12) **EUROPEAN PATENT SPECIFICATION**

(45) Date of publication and mention of the grant of the patent:
**26.05.2021 Bulletin 2021/21**

(21) Application number: **17893323.0**

(22) Date of filing: **20.11.2017**

(51) Int Cl.:
*H02S 50/15* $^{(2014.01)}$          *H02S 10/40* $^{(2014.01)}$

(86) International application number:
**PCT/JP2017/041644**

(87) International publication number:
**WO 2018/135123 (26.07.2018 Gazette 2018/30)**

(54) **SOLAR CELL MODULE ERROR DETERMINATION SYSTEM AND METHOD**

SYSTEM UND VERFAHREN ZUR BESTIMMUNG VON FEHLERN BEI SOLARZELLENMODULEN

SYSTÈME ET PROCÉDÉ DE DÉTERMINATION D'ERREUR DE MODULE PHOTOVOLTAÏQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2017 JP 2017005717**

(43) Date of publication of application:
**27.11.2019 Bulletin 2019/48**

(73) Proprietor: **Teikyo University Tokyo 173-8605 (JP)**

(72) Inventors:
• **KOBAYASHI Yasuyuki**
**Utsunomiya-shi**
**Tochigi 320-8551 (JP)**
• **KIKUMOTO Daichi**
**Utsunomiya-shi**
**Tochigi 320-8551 (JP)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**WO-A1-2017/042248     CN-A- 105 915 179**
**JP-A- 2003 234 489     JP-A- 2010 073 990**
**US-A1- 2013 314 118     US-A1- 2015 236 642**
**US-A1- 2016 218 670**

• **KAES M. ET AL.: 'Light-modulated Lock-in Thermography for Photosensitive pn-Structures and Solar Cells' PROGRESS IN PHOTOVOLTAICS vol. 12, no. 5, August 2004, pages 355 - 363, XP002600855**

## Description

[Technical Field]

The present invention relates to an abnormality determination system and method for a photovoltaic module.
In the related art, methods of inspecting photovoltaic modules (photovoltaic panels) including a plurality of photovoltaic cells connected in series are known (for example, see Patent Document 1). The document US 2015/236642 A1 is relevant prior art.

[Citation List]

[Patent Literature]

[Patent Document 1]
Japanese Unexamined Patent Application, First Publication No. 2013-131679

[Summary of Invention]

[Technical Problem]

In a photovoltaic module disclosed in Patent Document 1, when a power current of a cell decreases with failure of the cell, a power current of the entire photovoltaic module also decreases.
Accordingly, it is important to discover which cell has failed in the photovoltaic module. A failed cell shows a decrease in a power current and also shows a reverse voltage and a hot spot state. Therefore, when a cell voltage or cell temperature of an individual photovoltaic cell included in a photovoltaic module is monitored, a failed cell can be discovered.
However, a photovoltaic module is normally sealed with a resin. Therefore, a cell voltage of an individual photovoltaic cell may not be measured. A cell temperature can be easily observed by an infrared camera, but the cell temperature is strongly influenced by an ambient environment. Therefore, when failure of a cell is determined according to only a cell temperature, precision of determination of whether the cell has failed may be lowered.
The present invention is devised to solve the foregoing problems and an object of the present invention is to provide an abnormality determination system and method for a photovoltaic module capable of accurately determining which photovoltaic cell is in an abnormal state among a plurality of photovoltaic cells connected in series.

[Solution to Problem]

According to an embodiment of the present invention, there is provided an abnormality determination system for a photovoltaic module as recited in claim 1 and a corresponding method as recited in claim 6. Further advantageous embodiments are recited in the dependent claims.

[Advantageous Effects of Invention]

According to the present invention, it is possible to provide an abnormality determination system and method for a photovoltaic module capable of accurately determining which photovoltaic cell is in an abnormal state among a plurality of photovoltaic cells connected in series.

[Brief Description of Drawings]

Fig. 1 is a diagram showing an example of a configuration of an abnormality determination system for a photovoltaic module according to a first embodiment.
Fig. 2 is a diagram showing an example of a configuration of an abnormality determination system for a photovoltaic module according to a first modification example of the first embodiment.
Fig. 3 is a diagram showing an example of a configuration of an abnormality determination system for a photovoltaic module according to a second modification example of the first embodiment.
Fig. 4A is an equivalent circuit diagram showing a photovoltaic module and a load resistor shown in Fig. 1.
Fig. 4B is an equivalent circuit diagram showing a minute change in a current flowing in the photovoltaic module and the load resistor shown in Fig. 4A.

Fig. 5 is a modified diagram of the equivalent circuit diagram shown in Fig. 4B.

Fig. 6 is a diagram showing a correlation between a current output by a photovoltaic cell and a voltage applied to a differential resistor.

Fig. 7A is an equivalent circuit diagram showing an opened photovoltaic module.

Fig. 7B is an equivalent circuit diagram showing the opened photovoltaic module shown in Fig. 7A and a minute change in a power output voltage.

Fig. 8 is a diagram showing a result of a demonstration experiment.

Fig. 9 is a flowchart showing a process performed by the abnormality determination system for the photovoltaic module according to the first embodiment.

Fig. 10 is a diagram showing an example of a configuration of an abnormality determination system for a photovoltaic module according to a second embodiment.

Fig. 11 is a diagram showing an example of a configuration of an abnormality determination system for a photovoltaic module according to a third embodiment.

[Description of Embodiments]

[First embodiment]

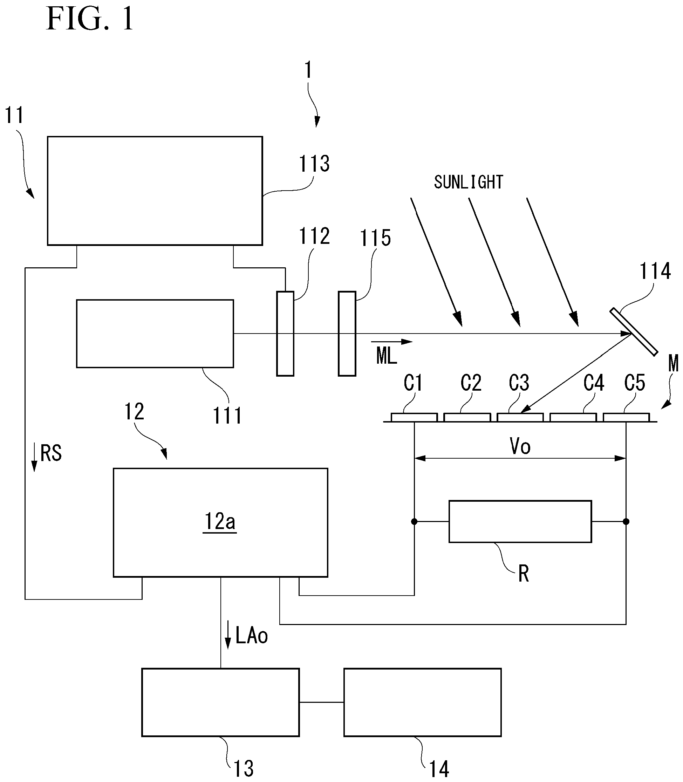

Hereinafter, embodiments of the present invention will be described with reference to the drawings. First, a configuration of an abnormality determination system 1 for a photovoltaic module M according to a first embodiment will be described with reference to Fig. 1.

<Configuration of abnormality determination system 1>

Fig. 1 is a diagram showing an example of the configuration of the abnormality determination system 1 for the photovoltaic module M according to the first embodiment.

In the example shown in Fig. 1, the abnormality determination system 1 according to the first embodiment is applied to a photovoltaic module M. The photovoltaic module M includes a plurality of photovoltaic cells C1, C2, C3, C4, and C5 connected in series. The photovoltaic module M is connected to a load resistor R.

In the example shown in Fig. 1, the photovoltaic module M includes five photovoltaic cells C1, C2, C3, C4, and C5. In another example, the photovoltaic module M may include any number of plural photovoltaic cells connected in series other than five.

In the example shown in Fig. 1, the abnormality determination system 1 includes a modulated light radiation unit 11, a phase detection unit 12, a determination unit 13, and an output unit 14. The modulated light radiation unit 11 includes a laser radiation unit 111, a light chopper unit 112, a chopper control unit 113, a reflector 114, and a filter 115. The laser radiation unit 111 radiates, for example, a laser such as a He-Ne laser.

In the example shown in Fig. 1, as described above, the modulated light radiation unit 11 includes the laser radiation unit 111. However, in another example, the modulated light radiation unit 11 may include a radiation unit that radiates light other than a laser.

In the example shown in Fig. 1, the light chopper unit 112 modulates the laser radiated from the laser radiation unit 111 into modulated light ML with a predetermined phase (frequency). The chopper control unit 113 controls the light chopper unit 112. The chopper control unit 113 outputs a reference signal RS indicating the phase (frequency) of the modulated light ML modulated by the light chopper unit 112. The filter 115 reduces the modulated light ML modulated by the light chopper unit 112. The filter 115 is, for example, a neutral density (ND) filter. The reflector 114 reflects the modulated light ML reduced by the filter 115. The modulated light ML reflected by the reflector 114 is radiated to the photovoltaic cell C3.

In the example shown in Fig. 1, the modulated light ML reflected by the reflector 114 is radiated to the photovoltaic cell C3. In another example, instead, the modulated light ML reflected by the reflector 114 may be radiated to any of the photovoltaic cells C1, C2, C4, and C5 other than the photovoltaic cell C3. In another example, instead, the reflector 114 may be omitted.

In the example shown in Fig. 1, the light chopper unit 112, the filter 115, and the reflector 114 are arranged in the order of the light chopper unit 112, the filter 115, and the reflector 114 between the laser radiation unit 111 and the photovoltaic module M. In another example, instead, the order of the light chopper unit 112, the filter 115, and the reflector 114 may be set to be different.

As described above, in the abnormality determination system 1 of the photovoltaic module M according to the first embodiment, the modulated light radiation unit 11 radiates the modulated light ML to one photovoltaic cell C3 among the plurality of photovoltaic cells C1, C2, C3, C4, and C5 included in the photovoltaic module M.

In the example shown in Fig. 1, the phase detection unit 12 includes a lock-in amplifier 12a. Specifically, the phase detection unit 12 is the lock-in amplifier 12a.

The lock-in amplifier 12a is connected to the photovoltaic module M. Specifically, a power output voltage Vo of the photovoltaic module M is input as an input signal to the lock-in amplifier 12a. The reference signal RS output from the chopper control unit 113 is input to the lock-in amplifier 12a. The lock-in amplifier 12a outputs a signal LAo in accordance with a state of the photovoltaic cell C3.

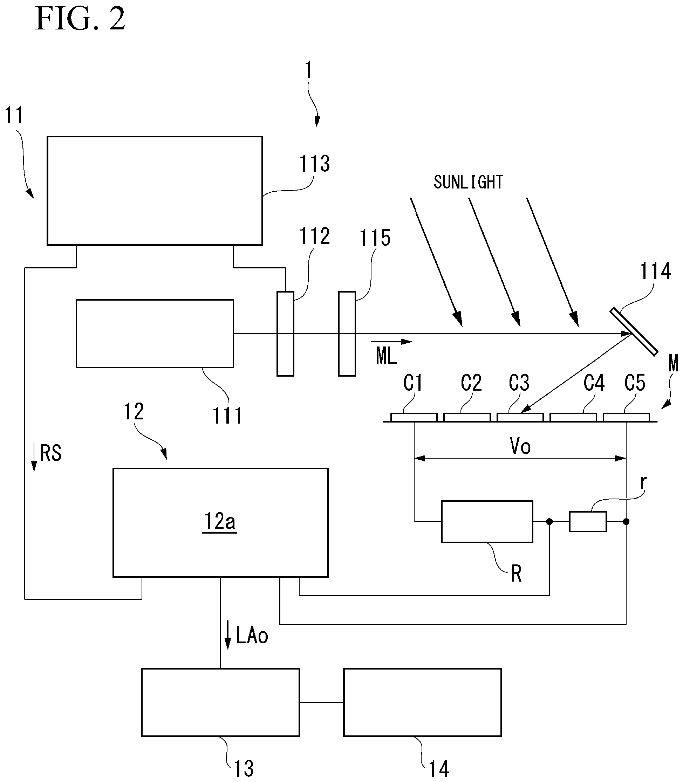

Fig. 2 is a diagram showing an example of a configuration of an abnormality determination system for a photovoltaic module according to a first modification example of the first embodiment. In the first modification example of the configuration of the abnormality determination system for the photovoltaic module according to the first embodiment, a minute resistor r for current detection is connected in series to a circuit connecting the photovoltaic module M and the load resistor R. When the power output voltage Vo of the photovoltaic module M exceeds a voltage upper limit of the input signal of the lock-in amplifier 12a, a voltage applied to the minute resistor r for current detection and set in a range below the voltage upper limit of the input signal of the lock-in amplifier 12a is given as an input signal of the lock-in amplifier 12a.

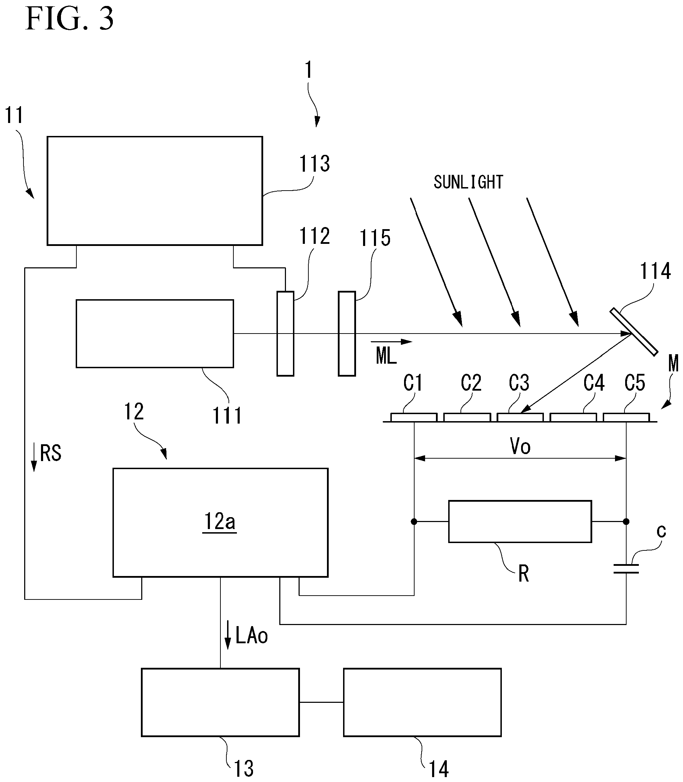

Fig. 3 is a diagram showing an example of a configuration of an abnormality determination system for a photovoltaic module according to a second modification example of the first embodiment. In the second modification example of the configuration of the abnormality determination system for the photovoltaic module according to the first embodiment, a capacitor C or a highpass filter (not shown) suppressing the power output voltage Vo which is a direct-current voltage or a bandpass filter (not shown) passing an alternating-current component close to a frequency of the modulated light ML is inserted into a conducting wire of an input signal to the lock-in amplifier 12a.

That is, in the examples shown in Figs. 1, 2, and 3, the reference signal RS input to the lock-in amplifier 12a indicates a phase (frequency) of the modulated light ML radiated from the modulated light radiation unit 11 to the photovoltaic cell C3. The signal LAo output from the lock-in amplifier 12a indicates a state of the photovoltaic cell C3 to which the modulated light ML is radiated.

As described above, in the abnormality determination system 1 for the photovoltaic module M according to the first embodiment, the phase detection unit 12 outputs the signal LAo in accordance with the state of the photovoltaic cell C3 according to a signal indicating a power output of the photovoltaic module M and the reference signal RS indicating the phase (frequency) of the modulated light ML. Specifically, when the signal indicating the power output of the photovoltaic module M and the reference signal RS indicating the phase (frequency) of the modulated light ML are input to the phase detection unit 12, the phase detection unit 12 outputs the signal LAo in accordance with the state of the photovoltaic cell C3.

In the examples shown in Figs. 1, 2, and 3, the signal LAo output from the lock-in amplifier 12a is input to the determination unit 13.

In the abnormality determination system 1 for the photovoltaic module M according to the first embodiment, the determination unit 13 determines whether the photovoltaic cell C3 is in an abnormal state according to the signal LAo output from the phase detection unit 12.

In the examples shown in Figs. 1, 2, and 3, a determination result in the determination unit 13, that is, whether the photovoltaic cell C3 is in the abnormal state, is output by the output unit 14. The output unit 14 includes at least one of a display unit that displays the determination result in the determination unit 13, a sound output unit that outputs a sound of the determination result in the determination unit 13, and a printing unit that prints the determination result in the determination unit 13. A user of the abnormality determination system 1 can ascertain whether the photovoltaic cell C3 is in the abnormal state in accordance with the determination result in the determination unit 13 output from the output unit 14.

<Analytic theory>

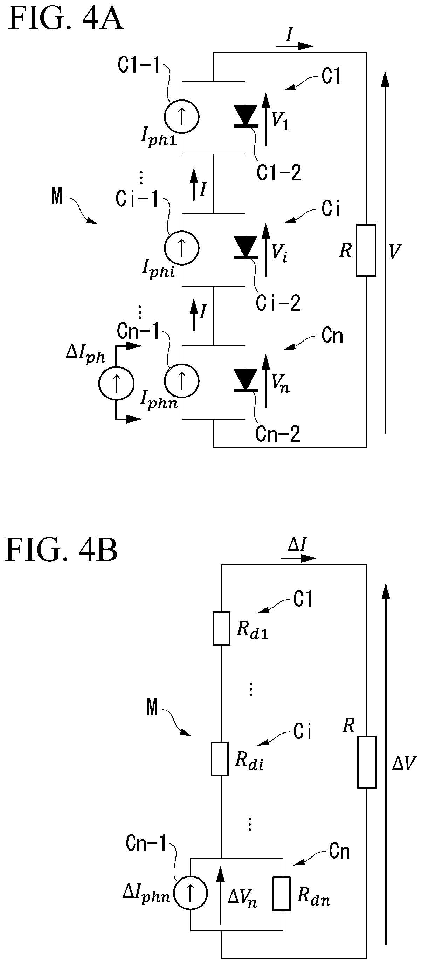

Fig. 4A is an equivalent circuit diagram showing the photovoltaic module M and the load resistor R shown in Fig. 1.

In the example shown in Fig. 1, the five photovoltaic cells C1, C2, C3, C4, and C5 are connected in series, but in an example shown in Fig. 4A, n photovoltaic cells C1, ..., Ci, ..., and Cn are connected in series. The photovoltaic cell C1 is expressed by a current source C1-1 outputting a current $I_{ph1}$ and a diode C1-2. The photovoltaic cell Ci is expressed by a current source Ci-1 outputting a current $I_{phi}$ and a diode Ci-2. The photovoltaic cell Cn is expressed by a current source Cn-1 outputting a current $I_{phn}$ and a diode Cn-2.

A current $I_{di}$ flowing in the diode Ci-2 is expressed by Expression (1) below.

[Math. 1]

$$I_{di} = I_{phi} - I = I_{0i}\left\{\exp\left(\frac{qV_i}{nkT}\right) - 1\right\} \qquad \cdots (1)$$

In Expression (1), I denotes a current flowing in the entire photovoltaic module M and the load resistor R. $I_{0i}$ denotes a reverse saturation current of the diode Ci-2 and q denotes an elementary charge.

Vi denotes a forward voltage of the diode Ci-2, n denotes a diode factor, k denotes a Boltzmann constant, and T denotes an absolute temperature.

In the example shown in Fig. 1, the modulated light ML is radiated from the modulated light radiation unit 11 to the photovoltaic cell C3. However, in the example shown in Fig. 4A, the modulated light ML is radiated from the modulated light radiation unit 11 to the photovoltaic cell Cn.

In the example shown in Fig. 4A, with radiation of the modulated light ML to the photovoltaic cell Cn, a photocurrent of the photovoltaic cell Cn increases by a minute amount $\Delta I_{ph}$. When a variation amount derived by the minute amount $\Delta I_{ph}$ of each unit of the circuit shown in Fig. 4A is obtained by a superimposition principle, the variation amount is as indicated in Fig. 4B.

Fig. 4B is an equivalent circuit diagram showing a minute change $\Delta I$ in the current I flowing in the photovoltaic module M and the load resistor R shown in Fig. 4A.

In the example shown in Fig. 4B, the photovoltaic cell C1 is expressed by a differential resistor $R_{d1}$.

That is, the current source C1-1 (see Fig. 4A) from the photocurrent of the photovoltaic cell C1 is opened and lost. When a change of the photovoltaic cell C1 is assumed to be minute, the diode C1-2 (see Fig. 4A) of the photovoltaic cell C1 is expressed by the differential resistor $R_{d1}$.

Similarly, the photovoltaic cell Ci is expressed by the differential resistor $R_{d1}$.

The photovoltaic cell Cn to which the modulated light ML from the modulated light radiation unit 11 is radiated is expressed by the current source Cn-1 outputting a minute change $\Delta I_{phn}$ of the current and a differential resistor $R_{dn}$.

The differential resistor $R_{di}$ of the photovoltaic cell Ci is expressed by Expression (2) below.

[Math. 2]

$$R_{di} = \frac{n\,kT/q}{I_{di} + I_{oi}} = \frac{n\,kT/q}{I_{phi} - I + I_{oi}} \qquad \cdots (2)$$

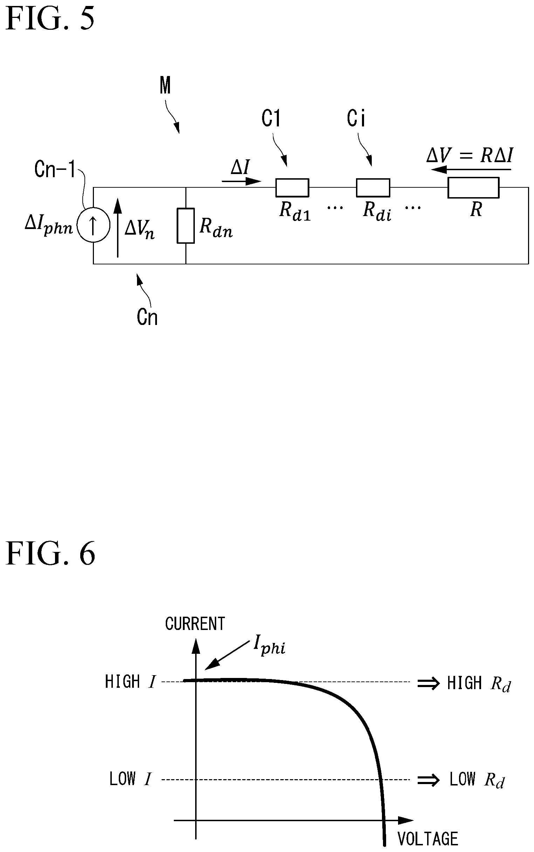

Fig. 5 is a modified diagram of the equivalent circuit diagram shown in Fig. 4B.

A change $\Delta V_n$ of the voltage of the photovoltaic cell Cn is expressed by Expression (3-1) below.

The minute change $\Delta I$ of the current I flowing in the photovoltaic module M and the load resistor R is expressed by Expression (3-2) below.

A change $\Delta V$ of a voltage applied to the load resistor R is expressed by Expression (3-3) below.

[Math. 3]

$$\Delta V_n = \Delta I_{phn} \cdot \frac{R_{dn}(\Sigma_{i \neq n} R_{di} + R)}{R_{dn} + \Sigma_{i \neq n} R_{di} + R} \qquad \cdots (3\text{-}1)$$

$$\Delta I = \Delta I_{phn} \cdot \frac{R_{dn}(\Sigma_{i \neq n} R_{di} + R)}{(R_{dn} + \Sigma_{i \neq n} R_{di} + R)(\Sigma_{i \neq n} R_{di} + R)} = \frac{R_{dn} \cdot \Delta I_{phn}}{\Sigma R_{di} + R}$$
$$\cdots (3\text{-}2)$$

$$\Delta V = \frac{R}{\sum R_{di} + R} \cdot R_{dn} \cdot \Delta I_{phn} \qquad \cdots \ (3\text{-}3)$$

As indicated in Expression (3-3), when the change $\Delta I_{phn}$ in the current is a constant value, the change $\Delta V$ in the voltage is proportional to the differential resistor $R_{dn}$.

The denominator of the right side of Expression (3-3) is a sum of differential resistors of all the photovoltaic cells C1, ..., Ci, ..., Cn. Therefore, when the value of the differential resistor is not changed, the denominator of the right side Expression (3-3) is the same despite occurrence of the change $\Delta I_{phn}$ in the current in a certain photovoltaic cell.

When the change $\Delta I_{phn}$ of the photocurrent of the photovoltaic cell Cn is changed with radiation of the modulated light ML from the modulated light radiation unit 11 to the photovoltaic cell Cn, the change $\Delta V$ in the voltage applied to the load resistor R is obtained from the minute change $\Delta I$ in the current I flowing in the load resistor R.

In the example shown in Fig. 1, the power output voltage Vo of the photovoltaic module M, that is, the voltage applied to the load resistor R, is input as an input signal to the lock-in amplifier 12a. Therefore, the change $\Delta V$ in the voltage applied to the load resistor R is obtained by the lock-in amplifier 12a.

As a photocurrent $I_{phn}$ of the photovoltaic cell Cn of the photovoltaic module M is closer to the current I flowing in the entire photovoltaic module M and the load resistor R, the differential resistor $R_{dn}$ of the photovoltaic cell Cn is larger. When the photocurrent $I_{phn}$ of the photovoltaic cell Cn is the minimum, the current I flowing in the entire photovoltaic module M and the load resistor R is equal to the photocurrent $I_{phn}$ and the differential resistor $R_{dn}$ of the photovoltaic cell Cn becomes the maximum.

Here, when a constant minute photocurrent which is equal to the magnitude of the change $\Delta I_{phn}$ in the current is generated in sequence in all the photovoltaic cells C1, ..., Ci, ..., and Cn, a change in the differential resistor $R_{dn}$ by the change $\Delta I_{phn}$ of the current is negligible in view of the change $\Delta V$ in the voltage applied to the load resistor R, and the change $\Delta I_{phn}$ in the current is generated in the photovoltaic cell Cn having the large differential resistor $R_{dn}$ at the time of $R_{dn} >> R_{di}$ and R ($i \neq n$), the change $\Delta V$ in the voltage applied to the load resistor R becomes the maximum.

Fig. 6 is a diagram showing a correlation between a current I output by the photovoltaic cell Ci in which incident sunlight is constant, that is, the photovoltaic cell Ci in which a current output by the current source $I_{phi}$ is constant, and a voltage applied to the photovoltaic cell Ci, that is, a voltage applied to the differential resistor $R_{di}$.

In Fig. 6, the horizontal axis represents a voltage applied to the differential resistor $R_{di}$. The vertical axis represents the current I output by the photovoltaic cell Ci. As shown in Fig. 6, the voltage applied to the differential resistor $R_{di}$ increases as the current I output by the photovoltaic cell Ci decreases. As shown in Fig. 6, when the current I output by the photovoltaic cell Ci is large and the voltage applied to the differential resistor $R_{di}$ is small, the differential resistor $R_{di}$ increases. Conversely, when the current I output by the photovoltaic cell Ci is small and the voltage applied to the differential resistor $R_{di}$ is large, the differential resistor $R_{di}$ decreases.

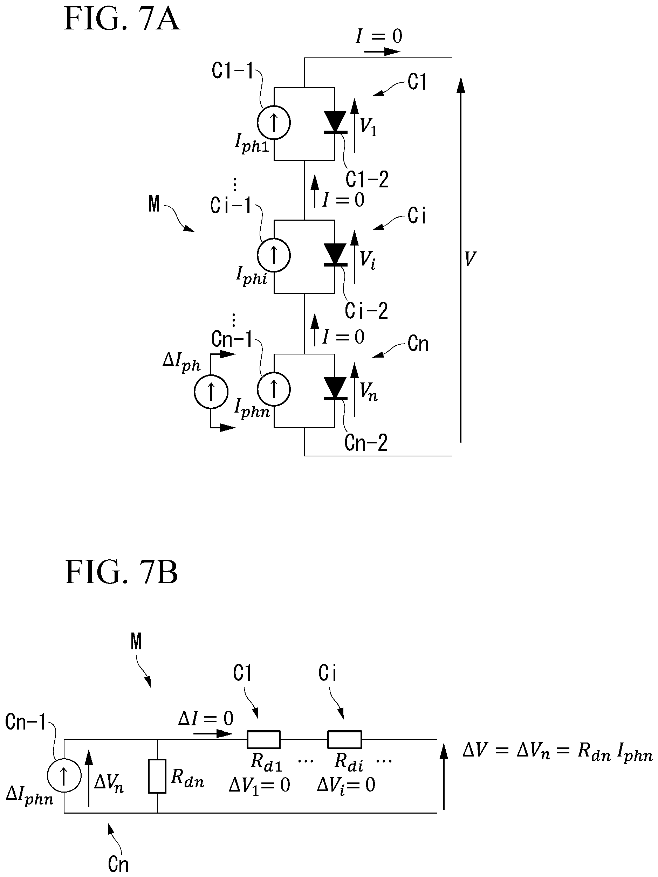

Fig. 7A is an equivalent circuit diagram showing the opened photovoltaic module M. Fig. 7B is an equivalent circuit diagram showing the opened photovoltaic module M shown in Fig. 7A and a minute change $\Delta V$ in the power output voltage Vo.

In the examples shown in Figs. 4A and 4B, the photovoltaic module M is not opened. In the examples shown in Figs. 7A and 7B, however, the photovoltaic module M is opened.

In the examples shown in Figs. 7A and 7B, the minute change $\Delta V_n$ in the voltage is made in only the photovoltaic cell Cn in which the minute change $\Delta I_{phn}$ of the current is made. Therefore, a minute change $\Delta V$ of the power output voltage Vo of the photovoltaic module M is expressed by Expression (4) below.

$$\Delta V = \Delta V_n = R_{dn} \Delta I_{phn} \qquad (4)$$

Even when a control current source causes a current with a constant value to flow, the minute change $\Delta I$ in the current I flowing in the photovoltaic module M and the load resistor R is zero. Therefore, the minute change $\Delta V$ of the power output voltage Vo of the photovoltaic module M in this case is also expressed by Expression (4) above.

As described above, it is considered that a weak component synchronized with the modulated light ML is included in the power output voltage Vo of the photovoltaic module M output to the lock-in amplifier 12a when the weak modulated light ML is radiated to only the photovoltaic cell Cn in the photovoltaic module M during generation. The weak component is considered to have information in which a state (for example, an operation point of the photovoltaic cell Cn, whether the photovoltaic cell Cn fails) of the photovoltaic cell Cn to which the weak modulated light ML is radiated is reflected.

Accordingly, in the example which is shown in Fig. 1 and in which the abnormality determination system 1 of the photovoltaic module M according to the first embodiment is applied, as described above, the power output voltage Vo of the photovoltaic module M and the reference signal RS indicating the phase (frequency) of the modulated light ML radiated to the photovoltaic cell C3 are input to the lock-in amplifier 12a. The lock-in amplifier 12a extracts a weak component synchronized with the modulated light ML. The lock-in amplifier 12a outputs the signal LAo in accordance with the state of the photovoltaic cell C3 to the determination unit 13. Therefore, in the example shown in Fig. 1, information regarding the state of the photovoltaic cell C3 can be obtained quantitatively and the determination unit 13 can determine whether the photovoltaic cell C3 is in an abnormal state.

< Demonstration experiment>

The present inventors carried out an experiment in which an output voltage of the lock-in amplifier 12a in the case of radiation of the modulated light ML to the photovoltaic cell which is in an abnormal state (that is, failure) was compared to an output voltage of the lock-in amplifier 12a in the case of radiation of the modulated light ML to the photovoltaic cell which is not in an abnormal state (that is, non-failure).

In the experiment, as in the example shown in Fig. 1, the photovoltaic module M including five photovoltaic cells C1, C2, C3, C4, and C5 connected in series was used. The photovoltaic cell C5 or the photovoltaic cell C1 was set to an abnormal state (that is, a state in which normal generation was not possible) by masking the photovoltaic cell C5 or the photovoltaic cell C1. The photovoltaic cells C2, C3, and C4 were set to a normal state (that is, a state in which normal generation was possible) by not masking the photovoltaic cells C2, C3, and C4.

In the experiment, as in the example shown in Fig. 1, the power output voltage Vo of the photovoltaic module M was measured. As in the example shown in Fig. 1, the power output voltage Vo was input as an input signal to the lock-in amplifier 12a. In the experiment, unlike the example shown in Fig. 1, a voltage of each of the photovoltaic cells C1, C2, C3, C4, and C5 was measured.

In the experiment, the modulated light radiation unit 11 was configured as in the example shown in Fig. 1. In the experiment, unlike the example shown in Fig. 1, an LED was used to radiate light simulated sunlight to the photovoltaic cells C1, C2, C3, C4, and C5 rather than sunlight.

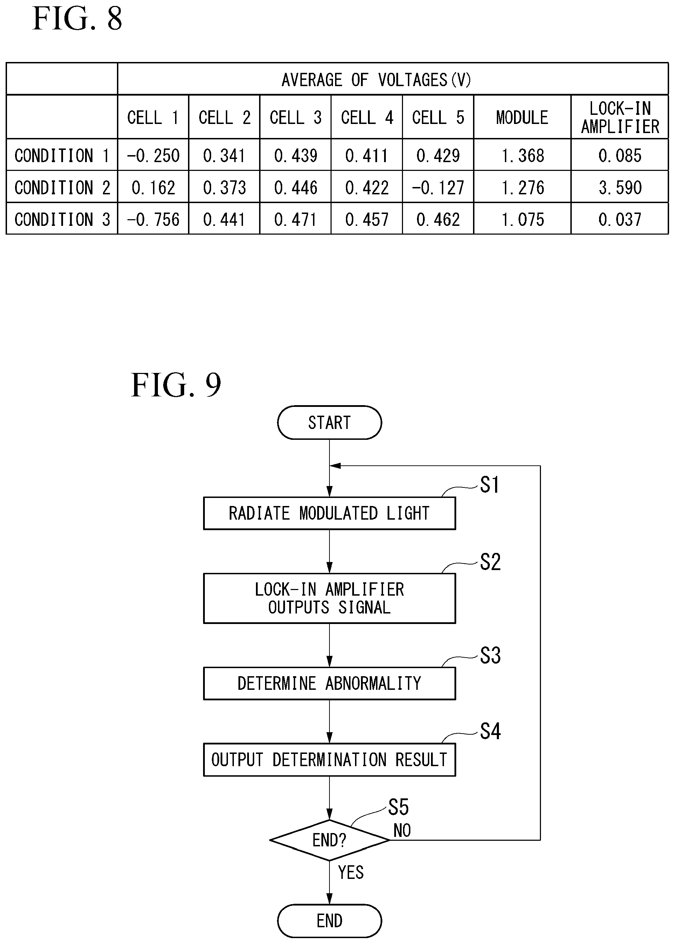

Fig. 8 is a diagram showing a result of a demonstration experiment.

In Fig. 8, "cell 1" refers to the photovoltaic cell C1, "cell 2" refers to the photovoltaic cell C2, "cell 3" refers to the photovoltaic cell C3, "cell 4" refers to the photovoltaic cell C4, and "cell 5" refers to the photovoltaic cell C5.

The "average of voltages (V)" of "cell 1" refers to a voltage (V) of the photovoltaic cell C1, the "average of voltages (V)" of "cell 2" refers to a voltage (V) of the photovoltaic cell C2, the "average of voltages (V)" of "cell 3" refers to a voltage (V) of the photovoltaic cell C3, the "average of voltages (V)" of "cell 4" refers to a voltage (V) of the photovoltaic cell C4, and the "average of voltages (V)" of "cell 5" refers to a voltage (V) of the photovoltaic cell C5.

The "average of voltages (V)" of a "module" refers to a power output voltage Vo (V) of the photovoltaic module M configured by connecting the photovoltaic cells C1, C2, C3, C4, and C5 in series. The "average of voltages (V)" of a "lock-in amplifier" refers to a voltage (V) of the signal LAo output from the lock-in amplifier 12a when the power output voltage Vo of the photovoltaic module M and the reference signal RS indicating the phase (frequency) of the modulated light ML are input to the lock-in amplifier 12a.

In the demonstration experiment, condition 1, condition 2, and condition 3 were set.

In condition 1, none of the photovoltaic cells C1, C2, C3, C4, and C5 were masked. That is, a normal state was set in all of the photovoltaic cells C1, C2, C3, C4, and C5. Simulated sunlight was radiated to all of the photovoltaic cells C1, C2, C3, C4, and C5. The modulated light ML was radiated from the modulated light radiation unit 11 to only the photovoltaic cell C5.

As shown in Fig. 8, in "condition 1," the power output voltage Vo of the photovoltaic module M became 1.368 (V). The output voltage of the lock-in amplifier 12a became 0.085 (V). The voltage of the photovoltaic cell C5 in the normal state belongs to a group in which the voltage is higher among the voltages of the other photovoltaic cells C1 to C4 according to condition 1 of Fig. 8, and thus a differential resistor $R_{d5}$ of the photovoltaic cell C5 belongs to a group in which the differential resistance is smaller. When the differential resistance is small, the change $\Delta V$ in the voltage applied to the load resistor R decreases from Expression (3-3). Therefore, the output voltage of the lock-in amplifier 12a decreases.

In condition 2, the photovoltaic cell C5 was masked without masking the photovoltaic cells C1, C2, C3, and C4. That is, a normal state was set in the photovoltaic cells C1, C2, C3, and C4 and an abnormal state was set in the photovoltaic cell C5. Simulated sunlight was radiated to all of the photovoltaic cells C1, C2, C3, C4, and C5. The modulated light ML was radiated to only the photovoltaic cell C5 set to the abnormal state.

As shown in Fig. 8, in "condition 2," the power output voltage Vo of the photovoltaic module M became 1.276 (V). The output voltage of the lock-in amplifier 12a became 3.590 (V). The voltage of the photovoltaic cell C5 in the abnormal state is the smallest in comparison with the voltages of the other photovoltaic cells C1 to C4 according to condition 2 of Fig. 8, and thus the differential resistor $R_{d5}$ of the photovoltaic cell C5 becomes the largest. When the differential resistance is large, the change $\Delta V$ in the voltage applied to the load resistor R increases from Expression (3-3). Therefore, the output voltage of the lock-in amplifier 12a increases.

That is, in condition 2 in which the photovoltaic cell C5 was set to the abnormal state, the power amount of the entire photovoltaic module M was lowered and the power output voltage Vo of the photovoltaic module M was lowered than in condition 1 in which all of the photovoltaic cells C1, C2, C3, C4, and C5 were set to the normal state.

Conversely, in condition 2 in which the modulated light ML was radiated to the photovoltaic cell C5 set to the abnormal state, the output voltage of the lock-in amplifier 12a was raised further than in condition 1 in which the modulated light ML was radiated to the photovoltaic cell C5 set to the normal state.

In condition 3, the photovoltaic cell C1 was masked without masking the photovoltaic cells C2, C3, C4, and C5. That is, a normal state was set in the photovoltaic cells C2, C3, C4, and C5 and an abnormal state was set in the photovoltaic cell C1. Simulated sunlight was radiated to all of the photovoltaic cells C1, C2, C3, C4, and C5. The modulated light ML was radiated to only the photovoltaic cell C5 set to the normal state.

As shown in Fig. 8, in "condition 3," the power output voltage Vo of the photovoltaic module M became 1.075 (V). The output voltage of the lock-in amplifier 12a became 0.037 (V). The voltage of the photovoltaic cell C5 in the normal state belongs to a group in which the voltage is higher among the voltages of the other photovoltaic cells C1 to C4 according to condition 3 of Fig. 8, and thus the differential resistor $R_{d5}$ of the photovoltaic cell C5 belongs to a group in which the differential resistance is smaller. When the differential resistance is small, the change $\Delta V$ in the voltage applied to the load resistor R decreases from Expression (3-3). Therefore, the output voltage of the lock-in amplifier 12a decreases.

That is, in condition 3 in which the photovoltaic cell C1 was set to the abnormal state, the power amount of the entire photovoltaic module M was lowered and the power output voltage Vo of the photovoltaic module M was lowered than in condition 1 in which all of the photovoltaic cells C1, C2, C3, C4, and C5 were set to the normal state.

Conversely, in condition 3 in which the modulated light ML was radiated to the photovoltaic cell C5 set to the normal state, the output voltage of the lock-in amplifier 12a became almost equal to that of condition 1 in which the modulated light ML was radiated to the photovoltaic cell C5 set to the normal state.

That is, in the demonstration experiment, the present inventors found that when the modulated light ML was radiated to the photovoltaic cell in the abnormal state, the output voltage of the lock-in amplifier 12a was higher than the output voltage of the lock-in amplifier 12a when the modulated light ML was radiated to the photovoltaic cell in the normal state.

That is, in the demonstration experiment, the present inventors found that when the photovoltaic cell to which the modulated light ML was radiated was in the abnormal state, the lock-in amplifier 12a output a higher voltage than when the photovoltaic cell to which the modulated light ML was radiated was in the normal state.

In the example shown in Fig. 8, the present inventors found that whether the photovoltaic cell to which the modulated light ML was radiated was in the abnormal state was determined according to the output voltage of the lock-in amplifier 12a by setting a threshold voltage of the output voltage of the lock-in amplifier 12a to, for example, 2.000 (V).

Specifically, in condition 1, since the output voltage (0.085 (V)) of the lock-in amplifier 12a is equal to or less than the threshold voltage (2.000 (V)), it is possible to determine that the photovoltaic cell C5 to which the modulated light ML is radiated is in the normal state. In condition 2, since the output voltage (3.590 (V)) of the lock-in amplifier 12a is higher than the threshold voltage (2.000 (V)), it is possible to determine that the photovoltaic cell C5 to which the modulated light ML is radiated is in the abnormal state. In condition 3, since the output voltage (0.037 (V)) of the lock-in amplifier 12a is equal to or less than the threshold voltage (2.000 (V)), it is possible to determine that the photovoltaic cell C5 to which the modulated light ML is radiated is in the normal state.

<Process performed by abnormality determination system 1>

Fig. 9 is a flowchart showing a process performed by the abnormality determination system 1 for the photovoltaic module M according to the first embodiment.

In step S1, the modulated light radiation unit 11 radiates the modulated light ML to one photovoltaic cell C1 among the plurality of photovoltaic cells C1, C2, C3, C4, and C5 included in the photovoltaic module M.

Subsequently, in step S2, the power output voltage Vo of the photovoltaic module M is input as a signal indicating the power output of the photovoltaic module M to the lock-in amplifier 12a included in the phase detection unit 12. The reference signal RS indicating the phase (frequency) of the modulated light ML is input from the chopper control unit 113 of the modulated light radiation unit 11 to the lock-in amplifier 12a. The lock-in amplifier 12a extracts a weak component synchronized with the modulated light ML and outputs the signal LAo in accordance with the state of the photovoltaic cell C1 to the determination unit 13.

Subsequently, in step S3, the determination unit 13 determines whether the photovoltaic cell C1 is in the abnormal state according to the output signal LAo from the lock-in amplifier 12a of the phase detection unit 12.

In the example in which the abnormality determination system 1 for the photovoltaic module M according to the first embodiment is applied, when a value indicated by the output signal LAo from the lock-in amplifier 12a of the phase detection unit 12 is greater than a threshold, the determination unit 13 determines in step S3 that the photovoltaic cell C1 to which the modulated light ML is radiated is in the abnormal state. Conversely, when the value indicated by the output signal LAo from the lock-in amplifier 12a of the phase detection unit 12 is equal to or less than the threshold, the determination unit 13 determines in step S3 that the photovoltaic cell C1 to which the modulated light ML is radiated is in the normal state.

In the example which is shown in Fig. 8 and to which the abnormality determination system 1 of the photovoltaic module M according to the first embodiment is applied, for example, when the output voltage of the lock-in amplifier 12a is greater than the threshold voltage of 2.000 (V), the determination unit 13 determines in step S3 that the photovoltaic cell C1 to which the modulated light ML is radiated is in the abnormal state. Conversely, for example, when the output voltage of the lock-in amplifier 12a is equal to or less than the threshold voltage of 2.000 (V), the determination unit 13 determines in step S3 that the photovoltaic cell C1 to which the modulated light ML is radiated is in the normal state.

Subsequently, in step S4, the output unit 14 outputs a determination result by the determination unit 13, that is, whether the photovoltaic cell C1 to which the modulated light ML is radiated is in the abnormal state.

Subsequently, in step S5, the abnormality determination system 1 determines whether the process shown in Fig. 9 ends. When the modulated light ML is radiated to all of the plurality of photovoltaic cells C1, C2, C3, C4, and C5 included in the photovoltaic module M, the abnormality determination system 1 determines in step S5 that the process shown in Fig. 9 ends. When the photovoltaic cell to which the modulated light ML is not radiated remains among the plurality of photovoltaic cells C1, C2, C3, C4, and C5 included in the photovoltaic module M, the abnormality determination system 1 determines in step S5 that the process shown in Fig. 9 does not end and the process returns to step S1.

In step S1, the modulated light radiation unit 11 radiates the modulated light ML to the subsequent photovoltaic cell C2 among the plurality of photovoltaic cells C1, C2, C3, C4, and C5 included in the photovoltaic module M.

The abnormality determination system 1 repeatedly performs the processes of steps S1 to S4 described above until the abnormality determination of all the plurality of photovoltaic cells C1, C2, C3, C4, and C5 included in the photovoltaic module M is completed.

In the above-described example, the determination result in step S4 is output whenever the abnormality determination of step S3 in each of the photovoltaic cells C1, C2, C3, C4, and C5 is performed. In another example, however, the output unit 14 may instead summarize and output the determination result of step S3 in each of the photovoltaic cells C1, C2, C3, C4, and C5.

<Conclusion of first embodiment>

The abnormality determination system 1 for the photovoltaic module M according to the first embodiment has been described above.

The abnormality determination system 1 for the photovoltaic module M according to the first embodiment is the abnormality determination system 1 for the photovoltaic module M including the plurality of photovoltaic cells C1, C2, C3, C4, and C5 connected in series. The abnormality determination system 1 includes the modulated light radiation unit 11 configured to radiate the modulated light ML to one photovoltaic cell C3 among the plurality of photovoltaic cells C1, C2, C3, C4, and C5; the phase detection unit 12 configured to output the signal LAo in accordance with a state of the photovoltaic cell C3 according to the signal indicating a power output of the photovoltaic module M and the reference signal RS indicating a phase (frequency) of the modulated light ML; and the determination unit 13 configured to determine whether the photovoltaic cell C3 is in an abnormal state according to the signal LAo output from the phase detection unit 12.

In the abnormality determination system 1 for the photovoltaic module M according to the first embodiment, the determination unit 13 determines whether the photovoltaic cell C3 is in the abnormal state according to a value indicated by the signal LAo output from the phase detection unit 12 and a threshold.

With such a configuration, the determination unit 13 can accurately determine which photovoltaic cell is in the abnormal state among the plurality of photovoltaic cells C1, C2, C3, C4, and C5 connected in series.

In an example to which the abnormality determination system 1 for the photovoltaic module M according to the first embodiment is applied, the phase detection unit 12 is the lock-in amplifier 12a. The signal indicating the power output of the photovoltaic module M and the reference signal RS are input to the lock-in amplifier 12a. When the photovoltaic cell C3 to which the modulated light ML is radiated is in the abnormal state, the lock-in amplifier 12a outputs a voltage higher than a voltage output from the lock-in amplifier 12a when the photovoltaic cell C3 to which the modulated light ML is radiated is in the normal state. The determination unit 13 determines that the photovoltaic cell C3 to which the modulated light ML is radiated is in the abnormal state when an output voltage of the lock-in amplifier 12a is higher than a threshold voltage. The determination unit 13 determines that the photovoltaic cell C3 to which the modulated light ML is radiated is in the normal state when the output voltage of the lock-in amplifier 12a is equal to or less than the threshold voltage.

With such a configuration, the phase detection unit 12 can extract a weak component synchronized with the phase (frequency) of the modulated light ML from the signal indicating the power output of the photovoltaic module M with high precision.

[Second embodiment]

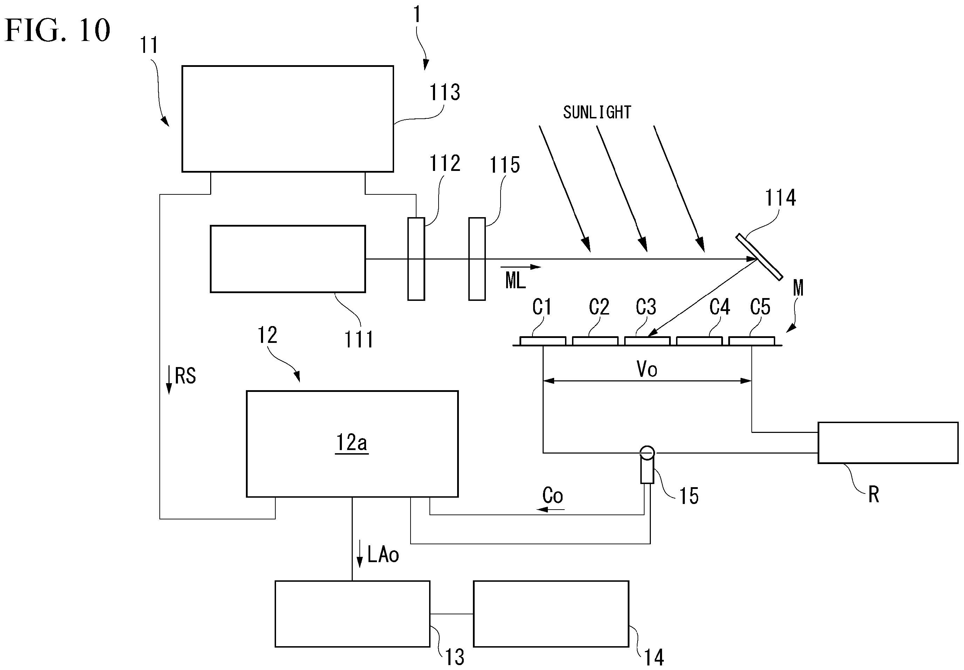

A configuration of an abnormality determination system 1 for a photovoltaic module M according to a second embodiment will be described with reference to Fig. 10. The abnormality determination system 1 for the photovoltaic module M according to the second embodiment has the same configuration as the abnormality determination system 1 for the photovoltaic module M according to the first embodiment except for points to be described below. Accordingly, in the abnormality determination system 1 for the photovoltaic module M according to the second embodiment, it is possible to obtain the same advantageous effects as those of the abnormality determination system 1 for the photovoltaic module M according to the first embodiment except for the points to be described below.

<Configuration of abnormality determination system 1>

Fig. 10 is a diagram showing an example of the configuration of the abnormality determination system 1 for the photovoltaic module M according to the second embodiment.
In an example which is shown in Fig. 10 and to which the abnormality determination system 1 for the photovoltaic module M according to the second embodiment is applied, the abnormality determination system 1 further includes a clamp sensor 15 that detects a power current of the photovoltaic module M.
As described above, in the example shown in Fig. 1, the power output voltage Vo of the photovoltaic module M is input as the input signal to the lock-in amplifier 12a.
In the example shown in Fig. 10, instead, the power current of the photovoltaic module M is detected by the clamp sensor 15. An output signal Co from the clamp sensor 15 is input as a signal indicating the power output of the photovoltaic module M to the lock-in amplifier 12a.
In the example shown in Fig. 10, as in the example shown in Fig. 1, the reference signal RS output from the chopper control unit 113 is input to the lock-in amplifier 12a. The lock-in amplifier 12a outputs the signal LAo in accordance with a state of the photovoltaic cell C3.
That is, in the example shown in Fig. 10, as in the example shown in Fig. 1, the reference signal RS input to the lock-in amplifier 12a indicates a phase (frequency) of the modulated light ML radiated from the modulated light radiation unit 11 to the photovoltaic cell C3. The signal LAo output from the lock-in amplifier 12a indicates a state of the photovoltaic cell C3 to which the modulated light ML is radiated.
The abnormality determination system 1 for the photovoltaic module M according to the second embodiment further includes the clamp sensor 15 that detects a power current of the photovoltaic module M.
In the abnormality determination system 1 for the photovoltaic module M according to the second embodiment, a signal indicating a power output of the photovoltaic module M input to the lock-in amplifier 12a is an output signal Co from the clamp sensor 15.
That is, in the abnormality determination system 1 for the photovoltaic module M according to the second embodiment, the power output voltage Vo of the photovoltaic module M is not input directly to the lock-in amplifier 12a, but the output signal Co from the clamp sensor 15 detecting the power current of the photovoltaic module M is input to the lock-in amplifier 12a.
Therefore, in the abnormality determination system 1 for the photovoltaic module M according to the second embodiment, even when the power output voltage Vo of the photovoltaic module M is high, the signal indicating the power output of the photovoltaic module M can be input to the lock-in amplifier 12a. As a result, even when the power output voltage Vo of the photovoltaic module M is high, the determination unit 13 can determine whether the photovoltaic cell C3 is in the abnormal state according to the output signal LAo from the lock-in amplifier 12a. The second embodiment conforms to an operation principle according to Expression (3-2) representing a minute change $\Delta I$ of the current I flowing in the photovoltaic module M and the load resistor R in <Analytic theory>.

[Third embodiment]

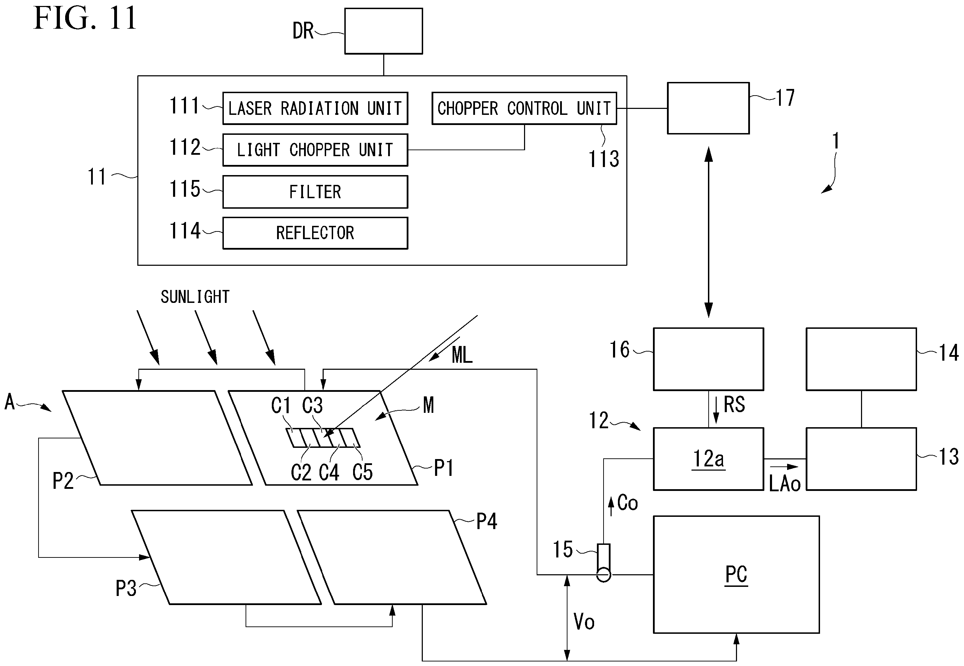

A configuration of an abnormality determination system 1 for a photovoltaic module M according to a third embodiment will be described with reference to Fig. 11. The abnormality determination system 1 for the photovoltaic module M according to the third embodiment has the same configuration as the abnormality determination system 1 for the photovoltaic module M according to the first embodiment except for points to be described below. Accordingly, in the abnormality determination system 1 for the photovoltaic module M according to the third embodiment, it is possible to obtain the same advantageous effects as those of the abnormality determination system 1 for the photovoltaic module M according to the first embodiment except for the points to be described below.

<Configuration of abnormality determination system 1>

Fig. 11 is a diagram showing an example of the configuration of the abnormality determination system 1 for the photovoltaic module M according to the third embodiment.

In an example shown in Fig. 11, the abnormality determination system 1 according to the third embodiment is applied to a photovoltaic panel array A that includes the photovoltaic module M. The photovoltaic module M includes the plurality of photovoltaic cells C1, C2, C3, C4, and C5 connected in series as in the example shown in Fig. 1.

In the example shown in Fig. 11, the photovoltaic panel array A includes four photovoltaic panels P1, P2, P3, and P4. The photovoltaic panel P1 includes the above-described photovoltaic module M and a plurality of photovoltaic modules having the same configuration as the photovoltaic module M. The photovoltaic panel P2 includes a plurality of photovoltaic modules having the same configuration as the photovoltaic module M. The photovoltaic panels P3 and P4 have the same configuration as the photovoltaic panel P2.

In the example shown in Fig. 11, the photovoltaic panel array A includes many photovoltaic cells C1, C2, C3, C4, C5, and the like connected in series. That is, the many photovoltaic cells C1, C2, C3, C4, C5, and the like included in the photovoltaic panel P1, many photovoltaic cells included in the photovoltaic panel P2, many photovoltaic cells included in the photovoltaic panel P3, and many photovoltaic cells included in the photovoltaic panel P4 are connected in series. The photovoltaic panel array A is connected to a power conditioner PC. The power conditioner PC converts direct-current power generated by the photovoltaic panel array A into alternating-current power.

As described above, in the example shown in Fig. 11, the photovoltaic panel array A includes four photovoltaic panels P1, P2, P3, and P4. In another example, the photovoltaic panel array A may include any number of photovoltaic panels other than four.

In the example which is shown in Fig. 11 and to which the abnormality determination system 1 for the photovoltaic module M according to the third embodiment is applied, the abnormality determination system 1 includes the modulated light radiation unit 11, the phase detection unit 12, the determination unit 13, the output unit 14, the clamp sensor 15, a communication control unit 16, and a communication control unit 17. The clamp sensor 15 detects a power current of the photovoltaic panel array A. The modulated light radiation unit 11 is mounted on an unmanned flying body DR.

In the example shown in Fig. 11, the modulated light ML reflected from the reflector 114 of the modulated light radiation unit 11 mounted on the unmanned flying body DR is radiated to the photovoltaic cell C3. However, in another example, instead, the reflector 114 may be omitted and the modulated light ML transmitting through the filter 115 of the modulated light radiation unit 11 may be radiated directly to the photovoltaic cell C3.

As described above, in the abnormality determination system 1 for the photovoltaic module M according to the third embodiment, the modulated light radiation unit 11 mounted on the unmanned flying body DR radiates the modulated light ML to one photovoltaic cell C3 among the many photovoltaic cells C1, C2, C3, C4, C5, and the like included in the photovoltaic panel array A.

In the example shown in Fig. 11, the communication control unit 17 connected to the chopper control unit 113 of the modulated light radiation unit 11 is mounted on the unmanned flying body DR. The communication control unit 16 is connected to the lock-in amplifier 12a. The reference signal RS output from the chopper control unit 113 is input to the lock-in amplifier 12a via the communication control unit 17, wireless communication, and the communication control unit 16. As another example, the chopper control unit 113 may not be mounted on the unmanned flying body DR and may be mounted near the lock-in amplifier 12a to control the light chopper unit 112 via wireless communication and the communication control unit 17 from the communication control unit 16.

In an example to which the abnormality determination system 1 for the photovoltaic module M according to the third embodiment is applied, when the modulated light ML is radiated to all of the many photovoltaic cells C1, C2, C3, C4, C5, and the like included in the photovoltaic panel array A, in step S5 of Fig. 9, the abnormality determination system 1 determines that the process shown in Fig. 9 ends. When the photovoltaic cell to which the modulated light ML has not been radiated remains among the many photovoltaic cells C1, C2, C3, C4, C5, and the like included in the photovoltaic panel array A, in step S5, the abnormality determination system 1 determines that the process shown in Fig. 9 does not end, and then the process returns to step S1.

As described above, in the abnormality determination system 1 for the photovoltaic module M according to the third embodiment, the modulated light radiation unit 11 is mounted on the unmanned flying body DR. Therefore, for example, even when the photovoltaic cell C3 is disposed at a high position, the determination unit 13 can determine whether the photovoltaic cell C3 is in an abnormal state.

The embodiments of the present invention have been described in detail above with reference to the drawings, but specific configurations are not limited to the embodiments and may be appropriately modified within the scope of the present invention without departing from the gist of the present invention. The configurations described in the above-described embodiments may be combined.

Apart or the entirety of the abnormality determination system 1 according to the foregoing embodiments may be realized by dedicated hardware or may be realized by a memory and a microprocessor.

Apart or the entirety of the abnormality determination system 1 may include a memory and a central processing unit (CPU) and a program for realizing a function of each unit included in each system may be loaded and executed on the memory to realize the function.

The process of each unit may be performed by recording a program for realizing some or all of the functions of the abnormality determination system 1 on a computer-readable recording medium and reading and executing the program recoded on the recording medium in the computer system. The "computer system" mentioned here is assumed to include an OS or hardware such as peripheral devices. The "computer system" is assumed to include a home page supply environment (or a display environment) when a WWW system is used.

The "computer-readable recording medium" is a flexible disc, a magneto-optical disc, a ROM, a portable medium such as a CD-ROM, or a storage device such as a hard disk contained in the computer system. The "computer-readable recording medium" is assumed to retain a program dynamically in a short time like a communication line when a program is transmitted via a communication line such as a telephone circuit or a network such as the Internet and is assumed to retain a program for a given time like a volatile memory inside the computer system serving a server or a client in this case. The program may realize some of the above-described functions or may realize the above-described functions in combination with a program previously recorded on the computer system.

[Reference Signs List]

1 Abnormality determination system
11 Modulated light radiation unit
111 Laser radiation unit
112 Light chopper unit
113 Chopper control unit
114 Reflector
115 Filter
12 Phase detection unit
12a Lock-in amplifier
13 Determination unit
14 Output unit
15 Clamp sensor
16 Communication control unit
17 Communication control unit
A Photovoltaic panel array
P1, P2, P3, P4 Photovoltaic panel
M Photovoltaic module
C1, C2, C3, C4, C5 Photovoltaic cell
R Load resistor
r Minute resistor for current detection
C Capacitor
DR Unmanned flying body
PC Power conditioner

**Claims**

1. An abnormality determination system (1) for a photovoltaic module (M) including a plurality of photovoltaic cells (C1, C2, C3, C4, C5) connected in series, the abnormality determination system (1) for the photovoltaic module (M) comprising:

   a modulated light radiation unit (11) configured to radiate modulated light to one photovoltaic cell among the plurality of photovoltaic cells (C1, C2, C3, C4, C5);
   a lock-in amplifier (12a) configured to output a signal in accordance with a state of the one photovoltaic cell according to a signal indicating a power output of the photovoltaic module (M) and a reference signal indicating a phase of the modulated light; and
   a determination unit (13) configured to determine whether the one photovoltaic cell is in an abnormal state according to the signal output from the lock-in amplifier (12a),

**characterised in that** the signal indicating the power output of the photovoltaic module (M) and the reference signal are input to the lock-in amplifier (12a).

2. The abnormality determination system (1) for the photovoltaic module (M) according to claim 1, wherein the determination unit (13) determines whether the one photovoltaic cell is in the abnormal state according to a value indicated by the signal output from the lock-in amplifier (12a) and a threshold.

3. The abnormality determination system (1) for the photovoltaic module (M) according to claim 2,
wherein, when the one photovoltaic cell is in the abnormal state, the lock-in amplifier (12a) is configured to output a higher voltage than a voltage output from the lock-in amplifier (12a) when the one photovoltaic cell is in a normal state, and
wherein the determination unit (13) is configured to determine that the one photovoltaic cell is in the abnormal state when an output voltage of the lock-in amplifier (12a) is higher than a threshold voltage, and determine that the one photovoltaic cell is in the normal state when the output voltage of the lock-in amplifier (12a) is equal to or less than the threshold voltage.

4. The abnormality determination system (1) for the photovoltaic module (M) according to claim 3, further comprising:

   a clamp sensor (15) configured to detect a power current of the photovoltaic module (M),
   wherein the signal indicating the power output of the photovoltaic module (M) input to the lock-in amplifier (12a) is a signal output from the clamp sensor (15).

5. The abnormality determination system (1) for the photovoltaic module (M) according to claim 1, wherein the modulated light radiation unit (11) is mounted on an unmanned flying body (DR).

6. An abnormality determination method for a photovoltaic module (M) including a plurality of photovoltaic cells (C1, C2, C3, C4, C5) connected in series, the abnormality determination method for the photovoltaic module (M) comprising:

   a first step of radiating modulated light to one photovoltaic cell among the plurality of photovoltaic cells (C1, C2, C3, C4, C5);
   a second step of outputting a signal in accordance with a state of the one photovoltaic cell from a lock-in amplifier (12a) according to a signal indicating a power output of the photovoltaic module (M) and a reference signal indicating a phase of the modulated light; and
   a third step of determining whether the one photovoltaic cell is in an abnormal state according to the signal in accordance with the state of the one photovoltaic cell,
   wherein the signal indicating the power output of the photovoltaic module (M) and the reference signal are input to the lock-in amplifier (12a).

**Patentansprüche**

1. Störungsbestimmungssystem (1) für ein Photovoltaikmodul (M), das eine Vielzahl von in Reihe geschalteten Photovoltaikzellen (C1, C2, C3, C4, C5) einschließt, wobei das Störungsbestimmungssystem (1) für das Photovoltaikmodul (M) umfasst:

   eine Einheit (11) zum Abstrahlen von moduliertem Licht, die so ausgelegt ist, dass sie moduliertes Licht auf eine Photovoltaikzelle aus der Vielzahl von Photovoltaikzellen (C1, C2, C3, C4, C5) strahlt;
   einen Lock-in-Verstärker (12a), der so ausgelegt ist, dass er gemäß einem Signal, das einen Leistungsausgang des Photovoltaikmoduls (M) anzeigt, und einem Referenzsignal, das eine Phase des modulierten Lichts anzeigt, ein Signal in Übereinstimmung mit einem Zustand der einen Photovoltaikzelle ausgibt; und
   eine Bestimmungseinheit (13), die so ausgelegt ist, dass sie gemäß dem vom Lock-in-Verstärker (12a) ausgegebenen Signal bestimmt, ob sich die eine Photovoltaikzelle in einem gestörten Zustand befindet,
   **dadurch gekennzeichnet, dass** das Signal, das den Leistungsausgang des Photovoltaikmoduls (M) anzeigt, und das Referenzsignal in den Lock-in-Verstärker (12a) eingegeben werden.

2. Störungsbestimmungssystem (1) für das Photovoltaikmodul (M) nach Anspruch 1, wobei die Bestimmungseinheit (13) gemäß einem Wert, der von dem vom Lock-in-Verstärker (12a) ausgegebenen Signal angezeigt wird, und einer Schwelle bestimmt, ob sich die eine Photovoltaikzelle im gestörten Zustand befindet.

3. Störungsbestimmungssystem (1) für das Photovoltaikmodul (M) nach Anspruch 2,
wobei der Lock-in-Verstärker (12a) so ausgelegt ist, dass er, wenn sich die eine Photovoltaikzelle im gestörten Zustand befindet, eine höhere Spannung ausgibt als eine Spannung, die vom Lock-in-Verstärker (12a) ausgegeben wird, wenn sich die eine Photovoltaikzelle in einem Normalzustand befindet, und
wobei die Bestimmungseinheit (13) so ausgelegt ist, dass sie bestimmt, dass sich die eine Photovoltaikzelle im gestörten Zustand befindet, wenn eine Ausgangsspannung des Lock-in-Verstärkers (12a) höher ist als eine Schwellenspannung, und bestimmt, dass sich die eine Photovoltaikzelle im Normalzustand befindet, wenn die Ausgangsspannung des Lock-in-Verstärkers (12a) gleich oder kleiner als die Schwellenspannung ist.

4. Störungsbestimmungssystem (1) für das Photovoltaikmodul (M) nach Anspruch 3, weiter umfassend:

einen Klemmensensor (15), der so ausgelegt ist, dass er einen Leistungsstrom des Photovoltaikmoduls (M) erkennt,
wobei es sich bei dem den Leistungsausgang des Photovoltaikmoduls (M) anzeigenden Signal, das in den Lock-In-Verstärker (12a) eingegebenen wird, um ein vom Klemmensensor (15) ausgegebenes Signal handelt.

5. Störungsbestimmungssystem (1) für das Photovoltaikmodul (M) nach Anspruch 1, wobei die Einheit (11) zum Abstrahlen von moduliertem Licht an einem unbemannten Flugkörper (DR) angebracht ist.

6. Störungsbestimmungsverfahren für ein Photovoltaikmodul (M), das eine Vielzahl von in Reihe geschalteten Photovoltaikzellen (C1, C2, C3, C4, C5) einschließt, wobei das Störungsbestimmungsverfahren für das Photovoltaikmodul (M) umfasst:

einen ersten Schritt des Strahlens von moduliertem Licht auf eine Photovoltaikzelle aus der Vielzahl von Photovoltaikzellen (C1, C2, C3, C4, C5);
einen zweiten Schritt des Ausgebens eines Signals in Übereinstimmung mit einem Zustand der einen Photovoltaikzelle von einem Lock-in-Verstärker (12a) gemäß einem Signal, das einen Leistungsausgang des Photovoltaikmoduls (M) anzeigt, und einem Referenzsignal, das eine Phase des modulierten Lichts anzeigt; und
einen dritten Schritt des Bestimmens, gemäß dem Signal in Übereinstimmung mit dem Zustand der einen Photovoltaikzelle, ob sich die eine Photovoltaikzelle in einem gestörten Zustand befindet,
wobei das Signal, das den Leistungsausgang des Photovoltaikmoduls (M) anzeigt, und das Referenzsignal in den Lock-in-Verstärker (12a) eingegeben werden.

## Revendications

1. Système de détermination d'anomalie (1) pour un module photovoltaïque (M) comportant une pluralité de cellules photovoltaïques (C1, C2, C3, C4, C5) connectées en série, le système de détermination d'anomalie (1) pour le module photovoltaïque (M) comprenant :

une unité de rayonnement de lumière modulée (11) configurée pour rayonner une lumière modulée vers une cellule photovoltaïque parmi la pluralité de cellules photovoltaïques (C1, C2, C3, C4, C5) ;
un amplificateur à détection synchrone (12a) configuré pour délivrer en sortie un signal conformément à un état de l'une cellule photovoltaïque selon un signal indiquant une sortie de puissance du module photovoltaïque (M) et un signal de référence indiquant une phase de la lumière modulée ; et
une unité de détermination (13) configurée pour déterminer si l'une cellule photovoltaïque est dans un état anormal selon le signal délivré en sortie de l'amplificateur à détection synchrone (12a),
**caractérisé en ce que**
le signal indiquant la sortie de puissance du module photovoltaïque (M) et le signal de référence sont entrés dans l'amplificateur à détection synchrone (12a).

2. Système de détermination d'anomalie (1) pour le module photovoltaïque (M) selon la revendication 1, dans lequel l'unité de détermination (13) détermine si l'une cellule photovoltaïque est dans l'état anormal selon une valeur indiquée par le signal délivré en sortie de l'amplificateur à détection synchrone (12a) et un seuil.

3. Système de détermination d'anomalie (1) pour le module photovoltaïque (M) selon la revendication 2,

**EP 3 573 230 B1**

dans lequel, lorsque l'une cellule photovoltaïque est dans l'état anormal, l'amplificateur à détection synchrone (12a) est configuré pour délivrer en sortie une tension supérieure à une tension délivrée en sortie de l'amplificateur à détection synchrone (12a) lorsque l'une cellule photovoltaïque est dans un état normal, et
dans lequel l'unité de détermination (13) est configurée pour déterminer que l'une cellule photovoltaïque est dans l'état anormal lorsqu'une tension de sortie de l'amplificateur à détection synchrone (12a) est supérieure à une tension seuil, et déterminer que l'une cellule photovoltaïque est dans l'état normal lorsque la tension de sortie de l'amplificateur à détection synchrone (12a) est égale ou inférieure à la tension seuil.

4. Système de détermination d'anomalie (1) pour le module photovoltaïque (M) selon la revendication 3, comprenant en outre :

un capteur de type pince (15) configuré pour détecter un courant de puissance du module photovoltaïque (M), dans lequel le signal indiquant la sortie de puissance du module photovoltaïque (M) entré dans l'amplificateur à détection synchrone (12a) est un signal délivré en sortie du capteur de type pince (15).

5. Système de détermination d'anomalie (1) pour le module photovoltaïque (M) selon la revendication 1, dans lequel l'unité de rayonnement de lumière modulée (11) est montée sur un corps volant sans pilote (DR).

6. Procédé de détermination d'anomalie pour un module photovoltaïque (M) comportant une pluralité de cellules photovoltaïques (C1, C2, C3, C4, C5) connectées en série, le procédé de détermination d'anomalie pour le module photovoltaïque (M) comprenant :

une première étape de rayonnement d'une lumière modulée vers une cellule photovoltaïque parmi la pluralité de cellules photovoltaïques (C1, C2, C3, C4, C5) ;
une deuxième étape de sortie d'un signal conformément à un état de l'une cellule photovoltaïque à partir d'un amplificateur à détection synchrone (12a) selon un signal indiquant une sortie de puissance du module photovoltaïque (M) et un signal de référence indiquant une phase de la lumière modulée ; et
une troisième étape de détermination de si l'une cellule photovoltaïque est dans un état anormal selon le signal conformément à l'état de l'une cellule photovoltaïque,
dans lequel le signal indiquant la sortie de puissance du module photovoltaïque (M) et le signal de référence sont entrés dans l'amplificateur à détection synchrone (12a).

FIG. 1

# FIG. 2

# FIG. 3

## FIG. 4A

## FIG. 4B

FIG. 5

FIG. 6

## FIG. 7A

## FIG. 7B

$$\Delta V = \Delta V_n = R_{dn} I_{phn}$$

# FIG. 8

|  | AVERAGE OF VOLTAGES(V) | | | | | | |
|---|---|---|---|---|---|---|---|
|  | CELL 1 | CELL 2 | CELL 3 | CELL 4 | CELL 5 | MODULE | LOCK-IN AMPLIFIER |
| CONDITION 1 | -0.250 | 0.341 | 0.439 | 0.411 | 0.429 | 1.368 | 0.085 |
| CONDITION 2 | 0.162 | 0.373 | 0.446 | 0.422 | -0.127 | 1.276 | 3.590 |
| CONDITION 3 | -0.756 | 0.441 | 0.471 | 0.457 | 0.462 | 1.075 | 0.037 |

# FIG. 9

```
        ( START )
            │
            ▼
   ┌─────────────────────┐  S1
   │ RADIATE MODULATED LIGHT │
   └─────────────────────┘
            │
            ▼
   ┌─────────────────────┐  S2
   │   LOCK-IN AMPLIFIER  │
   │    OUTPUTS SIGNAL    │
   └─────────────────────┘
            │
            ▼
   ┌─────────────────────┐  S3
   │ DETERMINE ABNORMALITY │
   └─────────────────────┘
            │
            ▼
   ┌─────────────────────┐  S4
   │ OUTPUT DETERMINATION RESULT │
   └─────────────────────┘
            │
            ▼           S5
          ◇ END? ◇──── NO
            │
           YES
            │
            ▼
         ( END )
```

FIG. 10

EP 3 573 230 B1

FIG. 11

EP 3 573 230 B1

**EP 3 573 230 B1**

**Patent documents cited in the description**

- US 2015236642 A1

- JP 2013131679 A